# EUROPEAN PATENT APPLICATION

(11) **EP 2 079 244 A1**
(43) Date of publication of application: **15.07.2009**
(21) Application number: 07831077.8
(22) Date of filing: 01.11.2007
(51) Int. Cl.: H04Q 7/22

(54) **MOBILE COMMUNICATION SYSTEM, RADIO BASE STATION, AND HANDOVER CONTROL METHOD**

(30) Priority: 02.11.2006 JP 2006299673
(71) Applicant: NTT DoCoMo, Inc., Chiyoda-ku Tokyo 100-6150 (JP)
(72) Inventor: UMESH, Anil, Tokyo 1006150 (JP); ISHII, Minami, Tokyo 1006150 (JP)
(74) Representative: HOFFMANN EITLE
(86) International application number: PCT/JP2007/071343
(87) International publication number: WO 2008/053972

(57) **Abstract**

According to one aspect of the present invention, a mobile communication system is used for transmission and reception of a data PDU (Protocol Data Unit) in a radio link control (RLC) sublayer between a radio base station and a mobile station. The present system includes a function of feeding back a control PDU to a transmitting side, the control PDU indicating a decoding result of a data PDU at a receiving side. In the present system, in response to an instruction from an upper layer of the RLC sublayer, the transmitting side triggers the receiving side to feed back the control PDU.

## Description

### TECHNICAL FIELD

The present invention relates to mobile communication systems, radio base stations and handover control methods for the mobile communication systems.

### BACKGROUND ART

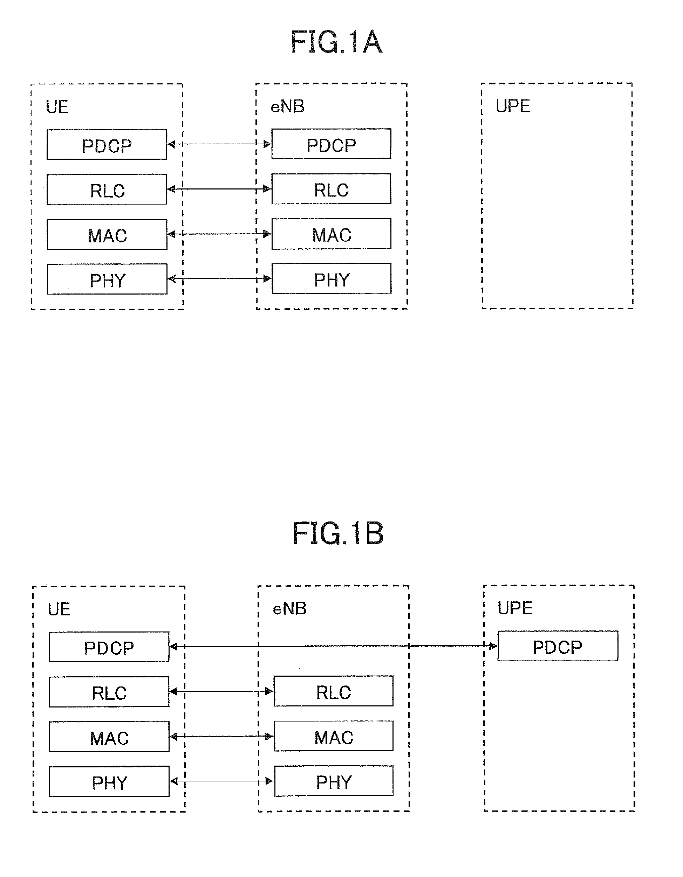

FIG. 1A illustrates an exemplary radio protocol stack for a user-plane (U-plane) in E-UTRAN (Evolved-Universal Terrestrial Radio Access Network) that is being technically studied and standardized by 3GPP.

As illustrated in FIG. 1A, a radio protocol stack for the U-plane in the E-UTRAN includes a physical (PHY) layer, a medium access control (MAC) sublayer, a radio link control (RLC) sublayer and a packet data convergence protocol (PDCP) sublayer in sequence from lower layers. The PHY layer, the MAC sublayer, the RLC sublayer and the PDCP sublayer are terminated at a user apparatus or equipment (UE) and a base station or eNB (E-UTRAN Node B) and the individual (sub)layers communicate in pairs. In other embodiments, the PDCP sublayer may be terminated at the UE and a UPE, as illustrated in FIG. 1B.

In FIG. 1A, only the radio protocol stack is illustrated and an upper application layer is not illustrated. At the transmitting side, some transmission operations in the PDCP sublayer, the RLC sublayer, the MAC sublayer and the PHY layer are applied in that order to user data supplied from such an application layer. On the other hand, at the receiving side, some reception operations in the PHY layer, the MAC sublayer, the RLC sublayer and the PDCP sublayer are applied in that order, and resultant information is supplied to an application layer of the receiving side. Note that the eNB serves as the transmitting side and the UE serves as the receiving side in downlinks.

At the transmitting side, the PDCP sublayer in FIG. 1A applies security processing and/or applies header compression and/or other operations to the user data supplied from the application layer and supplies resultant data to the RLC sublayer. At the receiving side, the PDCP sublayer applies security deprocessing and/or applies header decompression and/or other operations to data supplied from the RLC sublayer and supplies resultant user data to the application layer.

At the transmitting side, the RLC sublayer in FIG. 1A applies segmentation, concatenation and/or other operations to data supplied from the PDCP sublayer and supplies resultant data to the MAC sublayer. At the receiving side, the RLC sublayer applies reordering, reassembly and/or other operations to data supplied from the MAC sublayer and supplies resultant data to the PDCP sublayer. Also, data retransmission is controlled through communications of RLC control signals in the RLC sublayer between the transmitting side and the receiving side.

At the transmitting side, the MAC sublayer in FIG. 1A applies multiplexing and/or other operations to data supplied from the RLC data and supplies resultant data to the PHY layer. At the receiving side, the MAC sublayer applies demultiplexing and/or other operations to data supplied from the PHY layer and supplies resultant data to the RLC sublayer. Also, HARQ based data retransmission control and/or determination of adaptive modulation and coding (AMC) depending on instantaneous radio quality are carried out through communications of MAC control signals in the MAC sublayer between the transmitting side and the receiving side.

At the transmitting side, the PHY layer in FIG. 1A applies encoding, modulation and/or the operations to data supplied from the MAC sublayer and wirelessly transmits resultant data via an RF unit. At the receiving side, the PHY layer applies decoding, demodulation and/or other operations to data supplied from the RF unit and supplies resultant data to the MAC sublayer.

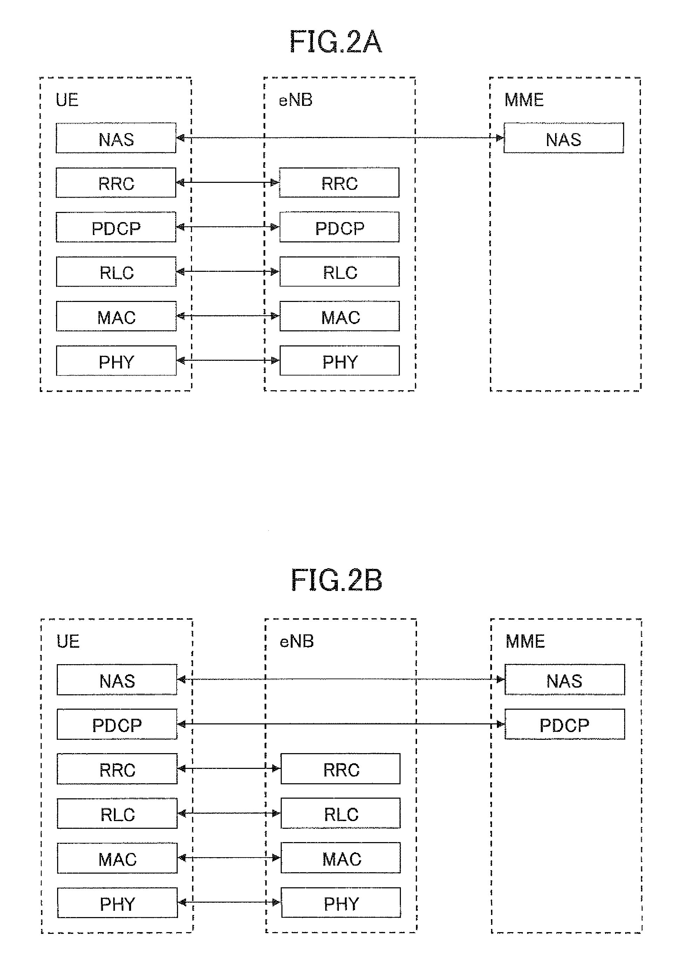

FIG. 2A illustrates an exemplary radio protocol stack for a control-plane (C-plane) in the E-UTRAN that is being standardized by 3GPP.

As illustrated in FIG. 2A, a radio protocol stack for the C-plane in the E-UTRAN includes a PHY layer, a MAC sublayer, a RLC sublayer, a PDCP sublayer, a radio resource control (RRC) layer and a non-access stratum (NAS) layer in sequence from lower layers. The PHY layer, the MAC sublayer, the RLC sublayer, the PDCP sublayer and the RRC layer are terminated at a mobile station or UE and an eNB whereas the NAS layer is terminated at the UE and a MME (Mobility Management Entity), and the individual (sub)layers communicate in pairs. In this radio protocol stack, the PHY layer, the MAC sublayer and the RLC sublayer in the mobile station and the PHY layer, the MAC sublayer and the RLC sublayer in the eNB are the same as those for the U-plane. Also, the PDCP sublayer in the mobile station and the PDCP sublayer in the eNB have the same function as those for the U-plane and additionally have an integrity protection function. The integrity protection function serves to ensure reliability of C-plane messages, and for example, even if a third party generates an illicit C-plane message to compromise a communication system, the integrity protection function enables the receiving side to determine whether that message is illicit. In another arrangement, the PDCP sublayer may be terminated at the UE and the MME, as illustrated in FIG. 2B.

At the transmitting side, some transmission operations in the PDCP sublayer, the RLC sublayer, the MAC sublayer and the PHY layer are applied in that order to RRC messages supplied to the RRC layer in FIG. 2A. On the other hand, at the receiving side, some reception operations in the PHY layer, the MAC sublayer, the RLC sublayer and the PDCP sublayer are applied in that order, and resultant information is supplied to the RRC layer in the receiving side. Note that the eNB serves as the transmitting side and the UE serves as the receiving side in downlinks. Also, at the transmitting side, some transmission operations in the RRC layer, the PDCP sublayer, the RLC sublayer, the MAC sublayer and the PHY layer are applied in that order to NAS messages supplied from the NAS layer. On the other hand, at the receiving side, some reception operations in the PHY layer, the MAC sublayer, the RLC sublayer, the PDCP sublayer and the RRC layer are applied in that order, and resultant information is supplied to the NAS layer in the receiving side. Note that the MME and the eNB serve as the transmitting side and the UE serves as the receiving side in downlinks.

The NAS layer in FIG. 2A performs authentication of mobile stations, tracks residing area of mobile stations during no communication, and/or sets QoS (Quality of Sevice) at communication bearer establishment through communications of NAS messages between the transmitting side and the receiving side.

The RRC layer in FIG. 2A sets or manages radio bearers established between eNB and UEs during communication and/or performs handover control of mobile stations during communication. Also, the NAS messages pass through the RRC layer.

At the transmitting side, the PDCP sublayer in FIG. 2A performs security processing and applies integrity protection and/or other operations to RRC messages supplied from the RRC layer (or NAS messages passing through the RRC layer) and supplies resultant data to the RLC sublayer. At the receiving side, the PDCP sublayer performs security deprocessing and applies an integrity check and/or other operations to data supplied from the RLC sublayer and supplies resultant RRC messages (or resultant NAS messages passing through the RRC layer) to the RRC layer.

At the transmitting side, the RLC sublayer in FIG. 2A applies segmentation, concatenation and other operations to data supplied from the PDCP sublayer and supplies resultant data to the MAC sublayer. At the receiving side, the RLC sublayer applies reordering, reassembly and/or other operations to data supplied from the MAC sublayer and supplies resultant data to the PDCP sublayer. Also, data retransmission is controlled through communications of RLC control signals in the RLC sublayer between the transmitting side and the receiving side.

At the transmitting side, the MAC sublayer in FIG. 2A applies multiplexing and/or other operations to data supplied from the RLC sublayer and supplies resultant data to the PHY layer. At the receiving side, the MAC sublayer applies demultiplexing and/or other operations to data supplied from the PHY layer and supplies resultant data to the RLC sublayer. Also, HARQ based data retransmission control and/or determination of adaptive modulation and coding (AMC) depending on instantaneous radio quality are carried out through communications of MAC control signals in the MAC sublayer between the transmitting side and the receiving side.

At the transmitting side, the PHY layer in FIG. 2A applies encoding, modulation and/or other operations to data supplied from the MAC sublayer and supplies data to an RF unit for wireless transmission. At the receiving side, the PHY layer applies decoding, demodulation and/or other operations to data supplied from the RF unit and supplies resultant data to the MAC sublayer.

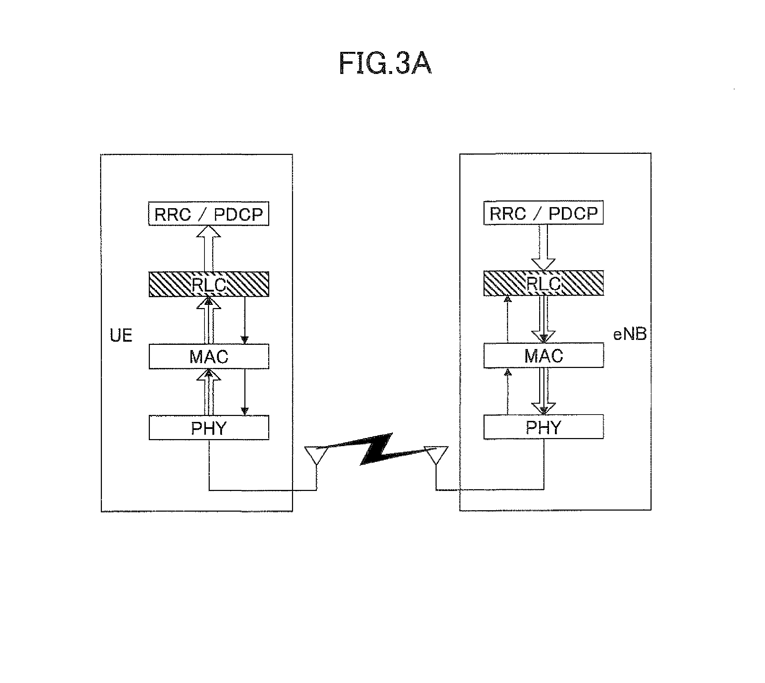

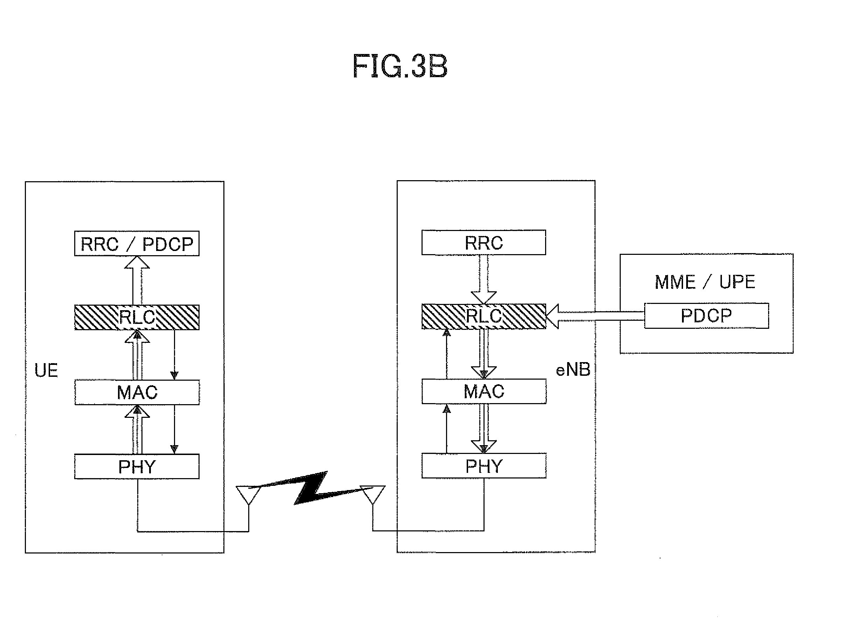

Exemplary transmission and reception of data via the RLC sublayer in accordance with the E-UTRAN are described below in conjunction with the present invention with reference to FIGS. 3A-6. Also, since the present invention mainly relates to downlink data transmission from a base station or eNB to a user apparatus or UE, it is assumed that the eNB serves as the transmitting side and the UE serves as the receiving side in FIGS. 3A-6.

As illustrated in FIG. 3A, data supplied from the PDCP sublayer is received at the RLC sublayer in the eNB. The data is transmitted to the RLC sublayer in the UE via the MAC sublayer and the PHY layer in the eNB, a radio interface, and the PHY layer and the MAC sublayer in the UE. In the UE, the RLC sublayer delivers data to the PDCP sublayer. These signal transmissions correspond to bold arrows illustrated in FIG. 3A. In fact, in the eNB, the RLC sublayer performs segmentation and/or concatenation operations on data supplied from the PDCP sublayer. In addition, the RLC sublayer generates RLC data protocol data units by attaching RLC headers herewith and supplies the generated RLC data protocol data units (PDU) to the MAC sublayer. In the UE, the RLC sublayer receives the RLC data PDUs from the MAC sublayer, removes the RLC header after completion of reordering, reassembly and/or other operations, and supplies resultant data to the PDCP sublayer. In FIG. 3A, thin arrows correspond to RLC control signals exchanged between the respective RLC sublayers of the eNB and the UE. Among these control signals, STATUS signals indicative of feedback from the RLC sublayer of a certain UE to the RLC sublayer of the eNB, and polling signals transmitted from the RLC sublayer of the eNB to the RLC sublayer of the UE may particularly relate to the present invention. Note that the STATUS signals and the Polling signals are used in the RLC sublayer in existing HSDPA and/or EUL systems.

Also, if the PDCP sublayer is terminated at UEs and MME, data may be supplied from the MME/UPE to the RLC sublayer of the eNB as needed.

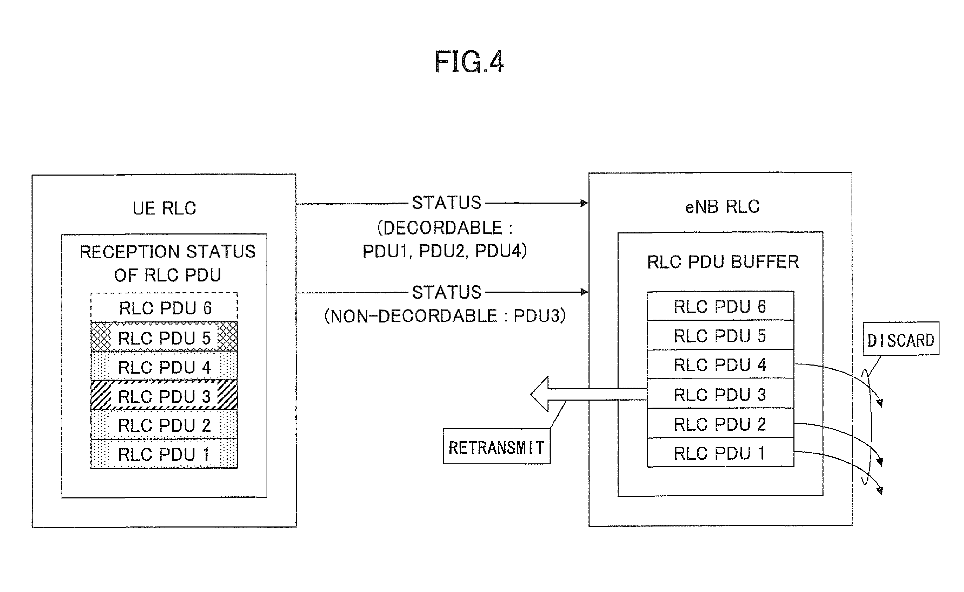

An exemplary role of the STATUS signal is described with reference to FIG. 4. As illustrated in FIG. 4, the RLC sublayer in the eNB buffers RLC PDUs that were transmitted to the MAC sublayer in the eNB. Also, the RLC sublayer in the UE provides feedback of reception statuses of the RLC data PDUs to the RLC sublayer in the eNB through the STATUS signals. Based on the STATUS signals provided from the RLC sublayer in the UE, the RLC sublayer in the eNB determines whether to discard or retransmit the buffered RLC data PDUs.

In FIG. 4, the reception status of the RLC data PDUs at the UE indicates that the RLC data PDUs 1, 2, 4 have been successfully received and decoded, and the STATUS signal has fed back this fact to the RLC in the eNB. In response to receipt of the STATUS signal, the RLC in the end can confirm that the RLC data PDUs 1, 2, 4 have successfully arrived at the UE and discard the RLC data PDU, 1, 2, 4 from the buffer, as illustrated. In the example illustrated in FIG. 4, the RLC in the eNB discards data on a per RLC data PDU basis for simplicity, but the RLC may actually discard the data on a per RLC SDU (Service Data Unit) basis in that the RLC sublayer in the transmitting side receives data on a per RLC SDU basis from the upper (PDCP) layer. Thus, if the RLC data PDU is arranged to include exactly one RLC SDU or n RLC SDUs, the illustrated example may correspond to the actual case. On the other hand, if the RLC SDU is arranged to stride across multiple RLC data PDUs, the RLC data PDUs are discarded together after receipt of the indication that these RLC data PDUs have been successfully received via the STATUS signal.

In FIG. 4, the reception status of the RLC data PDUs at the UE further indicates that the RLC data PDU 3 has not been successfully received and decoded and the STATUS signal has fed back this fact to the RLC in the eNBs. In response to receipt of this STATUS signal, the RLC in the eNB determines that the RLC data PDU 3 has not successfully arrived at the UE (for example, due to loss in the middle of transmission) and retransmits that RLC data PDU 3, as illustrated.

In FIG. 4, the reception status of the RLC data PDU at the UE further indicates that the RLC data PDU 5 has been successfully received and decoded but the STATUS signal has not fed back this fact to the RLC in the eNB. Thus, the eNB maintains the RLC data PDU 5 in the buffer, as illustrated.

In FIG. 4, the reception status of the RLC data PDUs at the UE further indicates that the RLC data PDU 6 illustrated in a dotted line has not been successfully received and decoded but the reception and decoding are not determined to be unsuccessful due to possibility of incomplete transmission or ongoing HARQ retransmission. Thus, the STATUS signal has not been transmitted to the eNB. Accordingly, the eNB also maintains the RLC data PDU 6 in the buffer, as illustrated.

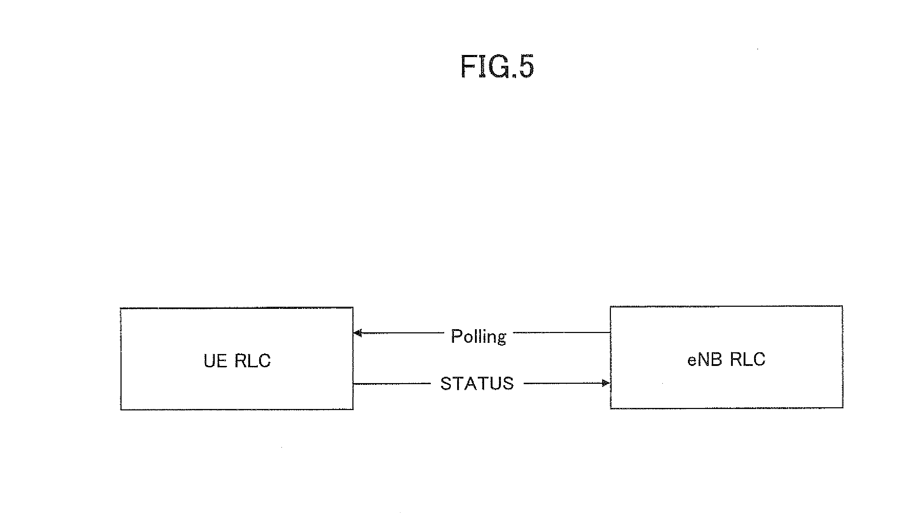

An exemplary role of the Polling signals is described with reference to FIG. 5. As illustrated in FIG. 5, the Polling signals is a signal in which the RLC sublayer in an eNB to triggers the RLC sublayer in a UE to feedback STATUS signals. In response to receipt of the Polling signals, if no restrictions are imposed, the RLC sublayer in the UE immediately returns to feedback the STATUS signals. Also in existing HSDPA and EUL systems, the Polling signals may be used to trigger feedback of STATUS signals. Transmission of the Polling signals may be triggered by occurrence of some events defined in HSDPA and EUL standard specifications as follows: transmission of last data remaining in a transmission or retransmission buffer, transmission of n RLC data PDUs or RLC SDUs, expiration of a periodic timer, no transmission of feedback to a STATUS signal within a predefined time period after transmission of a Polling signal, and a RLC window exceeding a predefined threshold. In the HSDPA and EUL, in addition to the Polling signals, detection of unsuccessful reception and/or decoding of RLC data PDUs at the receiving side, expiration of a periodic timer and/or resetting of MAC states may be defined as events of triggering feedback of STATUS signals.

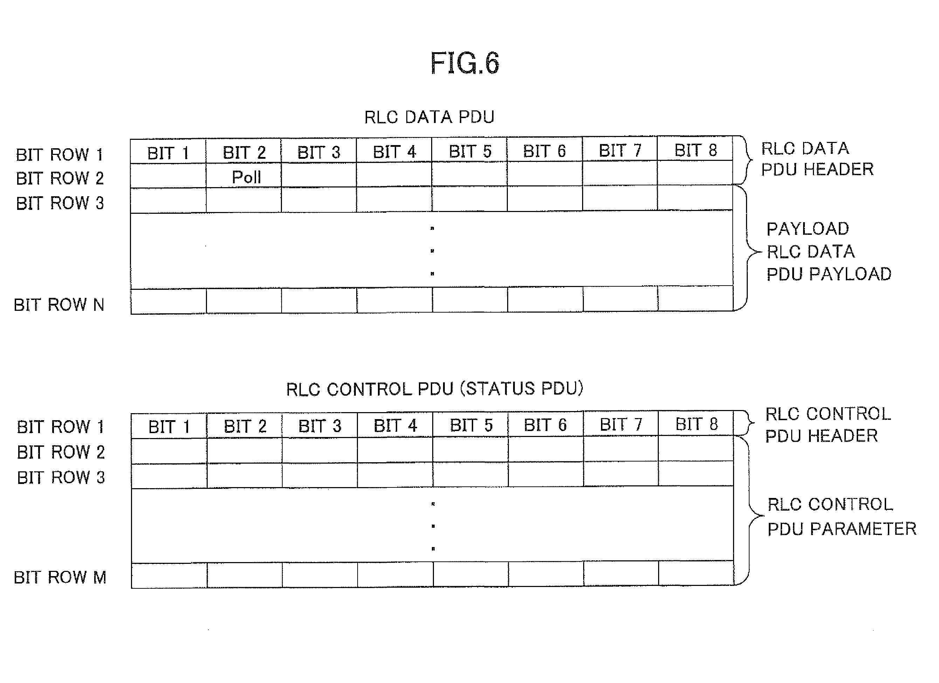

Exemplary signal formats of the RLC data PDU, the STATUS signal and the Polling signal are described with reference to FIG. 6. As illustrated in FIG. 6, the RLC data PDU includes a header part and a payload part. Note that the signal formats illustrated in FIG. 6 are simply illustrative. In FIG. 6, the first two bytes (16 bits) of the RLC data PDU correspond to the header part, and the remaining bytes correspond to the payload part for incorporating RLC SDUs. In the header part of the RLC data PDU, a sequence number and/or others may be attached in the RLC sublayer in the transmitting side. The Polling signals are commonly transmitted in one bit of the header part in the RLC data PDU. In FIG. 6, the first tenth bit of the header part corresponds to a Polling bit, and for example, if this Polling bit is set to "0", the RLC sublayer in the receiving side ignores the Polling bit. On the other hand, if the Polling bit is set to "1", the RLC sublayer in the receiving side operates to feedback a STATUS signal. The illustrated signal format may be also used in existing HSDPA and EUL systems.

In FIG. 6, a RLC control PDU is also illustrated. The RLC control PDU does not include the RLC SDU and is mapped to some control signals such as the STATUS signal. In the example illustrated in FIG. 6, the first one bit of the RLC control PDU corresponds to the header part, and the STATUS signals can be transmitted in the remaining bits. The STATUS signals may include information indicative of sequence numbers for identifying the RLC data PDUs and reception and/or decoding results (OK or NG) of the associated RLC data PDUs. The illustrated signal format may be also used in existing HSDPA and EUL systems.

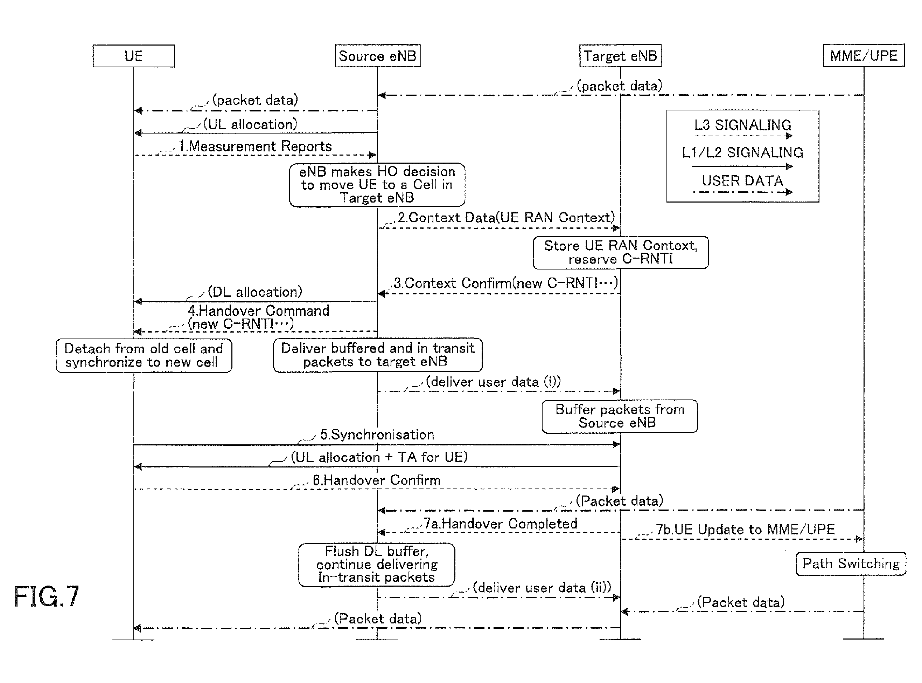

FIG. 7 illustrates an exemplary handover control procedure between eNBs specific to the E-UTRAN and arranged by agreement in studies of the E-UTRAN in the 3GPP. As illustrated in FIG. 7, a UE first receives user data via a source eNB (handover source eNB). Then, the source eNB determines, based on reporting of reception levels from the UE, to initiate handover of the UE to a target eNB (handover target eNB) and requests the target eNB to prepare for the handover. The reporting of the reception levels from the UE is terminated at the RRC layer in the source eNB, and the RRC layer in the source eNB determines whether the handover is necessary. In response to receipt of an indication from the target eNB that the target eNB is ready to initiate the handover, the RRC layer in the source eNB transmits a RRC message for initiating the handover to the RRC layer in the UE. At the same time, the source eNB starts to forward buffered downlink user data destined for the UE to the target eNB ("deliver user data (i)"). PDCP SDUs forwarded from the source eNB to the target eNB are transmitted to the UE with the inclusion of data that has not yet been transmitted to the UE. Note that RLC SDUs result from PDCP operations on the PDCP SDUs. To this end, all PDCP SDUs that have been transmitted to the MAC sublayer in the eNB but have not been confirmed for successful reception and decoding at the UE via feedback STATUS signals are forwarded. During that time, the UE attempts access to the target eNB and if the UE successfully accesses the target eNB, the RRC layer in the UE transmits a RRC message for indicating completion of the handover to the RRC layer in the target eNB ("6. Handover Confirm"). Upon receipt of this RRC message from the UE, the target eNB starts to transmit the downlink user data to the UE with inclusion of the PDCP SDUs forwarded from the source eNB. The above handover procedure is described in a non-patent document 1 "3GPP, TR25.813V1.0.1", for example.

### DISCLOSURE OF INVENTION

### [PROBLEM TO BE SOLVED BY THE INVENTION]

As stated above, in the handover of a UE between eNBs in accordance with the E-UTRAN, the source eNB forwards all PDCP SDUs destined for that UE that have not been confirmed for successful reception and decoding at the UE. However, the forwarded data may actually include data that has been successfully received and decoded at the UE but has not been confirmed for this fact via feedback STATUS signals, such as the RLC data PDU 5 in FIG. 3A. In the case where these PDCP SDUs are transmitted from the target eNB to the UE after the handover, radio resources and bandwidth over the wired transmission paths between the eNBs may be unnecessarily consumed, which may lead to inefficient utilization of communication resources. In order to reduce the PDCP SDUs, it may be conceived to set a higher feedback frequency of the STATUS signals. In this case, a smaller number of RLC SDUs that have been successfully received and decoded at the UE but have not been confirmed by the eNBs for this fact can be transmitted. On the other hand, if a higher transmission frequency of control signals such as the STATUS signal is set, radio bandwidths inherently used for transmission of user data may be congested, which may not be preferable from the viewpoint of data throughput. From this viewpoint, it is desirable that the STATUS signals be transmitted in a longer time period than transmissions of the RLC data PDUs.

One object of the present invention is to improve utilization efficiency of radio resources while reducing the transmission frequency of control signals such as the STATUS signals.

### [MEANS FOR SOLVING THE PROBLEM]

According to one aspect of the present invention, a mobile communication system is used for transmission and reception of a data PDU (Protocol Data Unit) in a radio link control (RLC) sublayer between a radio base station and a mobile station. The present system includes a function of feeding back a control PDU to a transmitting side, the control PDU indicating a decoding result of a data PDU at a receiving side. In the present system, in response to an instruction from an upper layer of the RLC sublayer, the transmitting side prompts the receiving side to feed back the control PDU.

### BRIEF DESCRIPTION OF DRAWINGS

FIG. 1A illustrates an exemplary protocol stack for a U-plane in accordance with the E-UTRAN;
FIG. 1B illustrates another exemplary protocol stack for a U-plane in accordance with the E-UTRAN;
FIG. 2A illustrates an exemplary protocol stack for a C-plane in accordance with the E-UTRAN;
FIG. 2B illustrates another exemplary protocol stack for a C-plane in accordance with the E-UTRAN;
FIG. 3A illustrates an exemplary data transmission between RLC sublayers in accordance with the E-UTRAN;
FIG. 3B illustrates another exemplary data transmission between RLC sublayers in accordance with the E-UTRAN;
FIG. 4 illustrates an exemplary arrangement of a STATUS signal;
FIG. 5 illustrates an exemplary arrangement of a Polling signal;
FIG. 6 illustrates exemplary formats of RLC data PDU and a RLC control PDU (PDUs for the STATUS signals);
FIG. 7 illustrates an exemplary handover procedure; and
FIG. 8 illustrates one embodiment of the present invention.

### LIST OF REFERENCE SYMBOLS

RLC: radio link control
PDU: protocol data unit
UE: user apparatus
eNB: base station
MME: mobility management entity

### BEST MODE FOR CARRYING OUT THE INVENTION

As stated above, there is a concern that if STATUS signals are only initiated based on existing Polling signals, radio resources cannot be efficiently utilized.

In one embodiment of the present invention, "an event of reception of an indication from the RRC layer" is adopted to trigger transmission of a Polling signal so that the RLC sublayer in an eNB can request the RLC sublayer in a UE to provide feedback or reply to the STATUS signal via the Polling signal immediately before handover. According to this embodiment, PDCP SDUs that have been successfully received and decoded at the UE that are unnecessarily transmitted from the source eNB to the target eNB in the handover can be avoided, while minimizing feedback of the STATUS signals from the RLC in the UE, resulting in conservation of wired transmission path bandwidths between the source eNB and the target eNB. In addition, unnecessary utilization of radio bandwidths can be reduced through transmission of these PDCP SDUs from the target eNB to the UE after the handover.

In one embodiment of the present invention, a radio base station is used in a mobile communication system. The radio base station includes a determination unit configured to determine whether a mobile station within a resident cell is to be subject to handover to a neighbouring cell, a transmission unit configured to transmit a polling signal to the mobile station, a reception unit configured to receive a status signal transmitted from the mobile station in response to the polling signal, an identification unit configured to analyze the received status signal and identify a service data unit (SDU) to forward to a radio base station in the neighbouring cell, and a forwarding unit configured to forward the SDU identified based on the analysis to the radio base station in the neighbouring cell.

In one embodiment, a predefined event for triggering transmission of the polling signal may include an instruction from an upper layer.

In one embodiment, the SDU to be forwarded to the neighbouring cell may include at least one of a SDU that has not been transmitted to the mobile station and a SDU that is to be retransmitted to the mobile station but is desirable not to include a SDU that does not have to be retransmitted to the mobile station.

In another aspect of the present invention, a handover control method is used in a mobile communication system. The method includes determining whether a mobile station within a resident cell is to be subject to handover to a neighbouring cell, transmitting a polling signal from a handover source base station to the mobile station, receiving a status signal from the mobile station transmitted to the handover source base station in response to the polling signal, analyzing the received status signal and identifying a service data unit (SDU) to be forwarded to a radio base station in the neighbouring cell, and forwarding the SDU identified based on the analysis to the radio base station in the neighbouring cell.

### [First Embodiment]

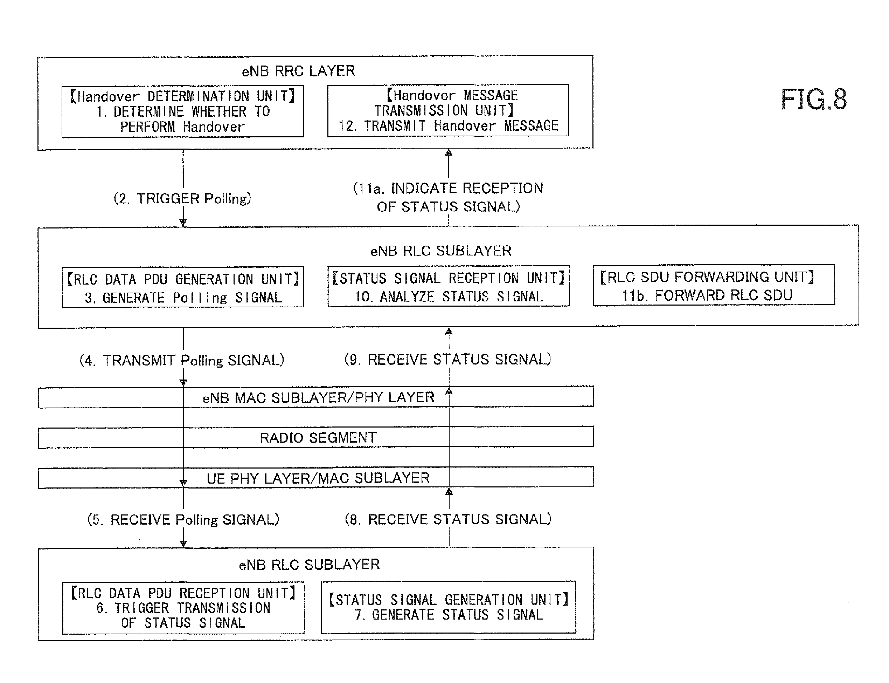

One embodiment of the present invention is described with reference to FIG. 8. In FIG. 8, at step 1, a handover (HO) determination unit of the RRC layer in the source eNB determines whether handover is to be initiated for a certain UE. Next, at step 2, the RRC layer in the source eNB triggers transmission of a Polling signal to the certain UE by transmitting signals to the RLC sublayer within the source eNB based on the positive HO determination. This triggering may be initiated either before or after the source eNB requests the target eNB to initiate the handover. At step 3, in response to receipt of the triggering for the Polling signal from the RRC layer in the source eNB, the RLC sublayer in the source eNB generates the Polling signal in a RLC data PDU generation unit in response to the request. In this embodiment, the Polling signal and the STATUS signal are exchanged on a per radio bearer, and thus if the certain UE has multiple established radio bearers, the Polling signals are generated in all the radio bearers. At step 4, the RLC sublayer in the eNB passes the generated Polling signal to the lower layer. At step 5, the Polling signal passing through a radio interface and a lower layer in the UE is received at a RLC data PDU reception unit of the RLC sublayer in the UE. At step 6, in response to detection of the Polling signal, the RLC data PDU reception unit triggers generation of a STATUS signal. At step 7, in response to the triggering via the Polling signal, a STATUS signal generation unit of the RLC sublayer in the UE generates the STATUS signal. At step 8, the RLC sublayer in the UE passes the generated STATUS signal to a lower layer. At step S9, the STATUS signal passing through the radio interface and the lower layer in the eNB is received at a STATUS signal reception unit of the RLC sublayer in the source eNB. At step 10, in response to receipt of the STATUS signal, the STATUS signal reception unit analyzes the STATUS signal. At step 11a, the RLC sublayer in the source eNB indicates the reception of the STATUS signal from the certain UE by transmitting signals to the RRC layer within the eNB. In parallel, at step 11b, the RLC sublayer starts to forward only RLC SDUs that have not been successfully received and decoded at the certain UE to the target eNB. At step 12, in response to receipt of the STATUS signal from the UE, the RLC sublayer starts to transmit a RRC message for initiating the handover to the UE.

As stated above, according to the embodiment of the present invention, "instruction from an upper (RRC) layer" is provided as the triggering of the Polling signal in RLC, and the RRC ensures the Polling signal is from the RLC to a mobile station immediately before handover. As a result, it is possible to avoid unnecessary transmission of service data units (RLC SDUs, that is, PDCP SDUs), for which successful reception at the mobile station has not been simply confirmed in a base station, to a neighbouring base station at handover.

The present invention has been described with reference to the specific embodiments of the present invention, but the embodiments are simply illustrative and variations, modifications, alterations and substitutions could be contrived by those skilled in the art. Some specific numerals have been used to facilitate understanding of the present invention, but unless otherwise noted, these numerals are simply illustrative and any other appropriate values may be used. For convenience of explanation, apparatuses according to the embodiments of the present invention have been described with reference to functional block diagrams, but these apparatuses may be implemented in hardware, software or combinations thereof. The present invention is not limited to the above embodiments, and variations, modifications, alterations and substitutions can be made by those skilled in the art without deviating from the spirit of the present invention. This international patent application is based on Japanese Priority Application No. 2006-299673 filed on November 2, 2006, the entire contents of which are hereby incorporated by reference.

## Claims

1. A mobile communication system for transmission and reception of a service data unit in a RLC (Radio Link Control) sublayer between a radio base station and a mobile station, wherein
the system includes a function of feeding back a control PDU to a transmitting side, the control PDU indicating a decoding result of a data PDU at a receiving side, and
in response to an instruction from an upper layer of the RLC sublayer, the transmitting side triggers the receiving side to feed back the control PDU.

2. The mobile communication system as claimed in claim 1, wherein the instruction from the upper layer indicates that the mobile station is to be subject to handover.

3. A radio base station for use in a mobile communication system, comprising:
a determination unit configured to determine whether a mobile station within a resident cell is to be subject to handover to a neighbouring cell;
a transmission unit configured to transmit a polling signal to the mobile station;
a reception unit configured to receive a status signal transmitted from the mobile station in response to the polling signal;
an identification unit configured to analyze the received status signal and identify a service data unit (SDU) to forward to a radio base station in the neighbouring cell; and
a forwarding unit configured to forward the SDU identified based on the analysis to the radio base station in the neighbouring cell.

4. The radio base station as claimed in claim 3, wherein a predefined event for triggering transmission of the polling signal includes an instruction from an upper layer.

5. The radio base station as claimed in claim 4, wherein the instruction from an upper layer for triggering transmission of the polling signal is issued due to the upper layer determining that a mobile station is to be subject to handover.

6. The radio base station as claimed in claim 3, wherein the SDU to be forwarded to the neighbouring cell includes at least one of a SDU that has not been transmitted to the mobile station or a SDU that is to be retransmitted to the mobile station but does not include a SDU that does not have to be retransmitted to the mobile station.

7. A handover control method for use in a mobile communication system, the method comprising:
determining whether a mobile station within a resident cell is to be subject to handover to a neighbouring cell;
transmitting a polling signal from a handover source base station to the mobile station;
receiving a status signal transmitted from the mobile station to the handover source base station in response to the polling signal;
analyzing the received status signal and identifying a service data unit (SDU) to be forwarded to a radio base station in the neighbouring cell; and
forwarding the SDU identified based on the analysis to the radio base station in the neighbouring cell.

8. The handover control method as claimed in claim 7, wherein a predefined event for triggering transmission of the polling signal includes an instruction from an upper layer.

9. The handover control method as claimed in claim 8, wherein the instruction from an upper layer for triggering transmission of the polling signal is issued due to the upper layer determining that a mobile station is to be subject to handover.

10. The handover control method as claimed in claim 7, wherein the SDU to be forwarded to the neighbouring cell includes at least one of a SDU that has not been transmitted to the mobile station or a SDU that is to be retransmitted to the mobile station but does not include a SDU that does not have to be retransmitted to the mobile station.
